# EUROPEAN PATENT SPECIFICATION

(11) **EP 3 493 633 B1**
(45) Date of publication and mention of the grant of the patent: **30.12.2020**
(21) Application number: 17908184.9
(22) Date of filing: 05.05.2017
(51) Int. Cl.: H04W 28/06, H04W 72/12

(54) **METHOD FOR ALLOCATING LOGICAL CHANNEL RESOURCES AND TERMINAL DEVICE**
VERFAHREN ZUR ZUWEISUNG VON LOGISCHEN KANALRESSOURCEN UND ENDGERÄTEVORRICHTUNG
PROCÉDÉ D'ATTRIBUTION DE RESSOURCES DE CANAL LOGIQUE ET DISPOSITIF TERMINAL

(43) Date of publication of application: 05.06.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/083257
(87) International publication number: WO 2018/201459

(56) References cited:
- WO-A1-2015/021609
- CN-A- 101 606 336
- CN-A- 102 036 390
- CN-A- 102 271 408
- CN-A- 102 377 803
- US-A1- 2017 041 933
- HUAWEI ET AL: "Analysis of L2 Segmentation and Concatenation in NR", 3GPP DRAFT; R2-166196, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung; 20161010 - 20161014 9 October 2016 (2016-10-09), XP051150810, Retrieved from the Internet: URL:http://www.3gpp.org/ftp/Meetings_3GPP_ SYNC/RAN2/Docs/ [retrieved on 2016-10-09]
- FUJITSU: "Considerations on the segmentation function in NR", 3GPP DRAFT; R2-168231 CONSIDERATIONS ON SEGMENTATION IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051177888, Retrieved from the Internet: URL:http://www.3gpp.org/ftp/Meetings_3GPP_ SYNC/RAN2/Docs/ [retrieved on 2016-11-13]
- ZTE CORPORATION ET AL: "Consideration on the Segmentation and Concatenation for NR UP", 3GPP DRAFT; R2-165125 CONSIDERATION ON THE SEGMENTATION AND CONCATENATION FOR NR UP, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Gothenburg, Sweden; 20160822 - 20160826 21 August 2016 (2016-08-21), XP051126748, Retrieved from the Internet: URL:http://www.3gpp.org/ftp/Meetings_3GPP_ SYNC/RAN2/Docs/ [retrieved on 2016-08-21]
- ZTE: "Correction on the Logical channel prioritization in DC", 3GPP DRAFT; R2-150562 CORRECTION ON THE LOGICAL CHANNEL PRIORITIZATION IN DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Athens, Greece; 20150209 - 20150213 11 February 2015 (2015-02-11), XP050935824, Retrieved from the Internet: URL:http://www.3gpp.org/ftp/Meetings_3GPP_ SYNC/RAN2/Docs/ [retrieved on 2015-02-11]
- INTEL CORPORATION: "User plane architecture for NR", 3GPP DRAFT; R2-165006, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126647, Retrieved from the Internet: URL:http://www.3gpp.org/ftp/Meetings_3GPP_ SYNC/RAN2/Docs/ [retrieved on 2016-08-21]
- ZTE: "Correction on the Logical Channel Prioritization in DC", 3GPP TSG-RAN WG2 meeting #89, R2-150562, 11 February 2015 (2015-02-11), XP050935824,
- ERICSSON: "New E-UTRAMAC Test Case 7.1.4.3a for Logical Channel Prioritization Handling for Category 0 UE", 3GPP TSG-RAN WG5 Meeting #68, R5-153955, 27 August 2015 (2015-08-27), XP051030253,
- LG ELECTRONICS INC.: "Clarification on DPR MAC CE", 3GPP TSG-RAN WG2 #97, R2-1702115, 18 February 2017 (2017-02-18), XP051507984,

## Description

### TECHNICAL FIELD

The present application relates to the field of communications, and in particular, to a method and a terminal device for allocating logical channel resources.

### BACKGROUND

The LTE Radio Link Control (RLC) protocol (TS36.322) specifies that functions supporting concatenation and segmentation of RLC Service Data Units (SDU) are required for RLC Unacknowledged Mode (UM) and Acknowledged Mode (AM). The concatenation is supported for the purpose that when a transmission resource provided by Medium Access Control (MAC) is larger than a size of one RLC SDU, RLC may concatenate multiple RLC SDUs together to form an RLC Protocol Data Unit (PDU) so that the resource can be fully utilized. The segmentation of the RLC SDU is supported for the purpose that assuming that a resource provided by the MAC layer is smaller than a size of one RLC SDU or a resource provided by the MAC layer is larger than a size of one RLC SDU but cannot transmit an integer number of RLC SDUs, RLC needs to segment the RLC SDU so that the resource provided by the MAC layer is fully utilized.

For the operation of concatenating and segmenting RLC SDU, the RLC protocol specifies that the operation of assembling RLC PDU can be initiated only after the RLC protocol layer obtains the transmission opportunity notified by the MAC layer, i.e., after the granted resources have been allocated, where the operation of assembling the RLC SDU into an RLC PDU may include concatenation and/or segmentation.

For these two functions, they are enabled for an RLC entity by default under any conditions, i.e. non-configurable. However, for some traffic that are sensitive to the requirement of the time delay, such real-time concatenation and segmentation operations may cause time delay, thereby resulting in unable to meet the Quality of Service (QoS) requirements for the time delay traffics in these cases.

Therefore, in the discussion of standardizing the NR, the concatenation function has been removed from the RLC layer, for which a main consideration is to enable pre-processing the RLC PDU packet of the RLC layer, that is, the assembling of RLC PDUs can be initiated without the RLC layer obtaining a resource grant of the MAC layer. In this case, once the RLC layer obtains a resource grant of the MAC layer, the already assembled RLC PDU can be sent to the MAC layer to be further assembled into a PDU of the MAC layer. It is worth noting that NR RLC still maintain the segmentation operation, also for the purpose that the granted resources of the MAC layer are more fully utilized, that is, if there are remaining resources, an RLC SDU can also be segmented to entirely filling the granted resources. Retaining the segmentation operation of RLC can also introduce the time delay. For example, an already assembled RLC PDU needs to be re-segmented because it cannot entirely fill granted resources of the MAC layer. Therefore, it can be considered to configure the segmentation function of some logical channels to be disabled. However, disabling the segmentation function may affects the ordering process of the existing logical channel prioritization (LCP), so it is required to improve the existing method for allocating logical channel resource.

R2-166196 provides further analysis on some L2 functions including segmentation and concatenation.

R2-168231 discusses the impact of configurable segmentation function in NR considering the latency performance and radio resource efficiency.

R2-165125 provides some consideration on the segmentation and concatenation in NR.

US2017041933A1 discloses a method and apparatus for prioritizing logical channels when a new transmission is performed. Logical channel resources are allocated for available data to a plurality of logical channels. A maximum bit rate (MBR) credit (i.e., token) is decremented in a buffer (i.e., bucket) associated with a particular one of the logical channels by the size of a medium access control (MAC) service data unit (SDU). The MBR credit may have a negative value. If any of the allocated channel resources remain, the logical channels are served n a decreasing priority order until the data is exhausted. A radio link control (RLC) SDU is not segmented if the whole RLC SDU fits into the remaining resources. The MAC SDU excludes a MAC PDU header and MAC padding.

R2-150562 discusses the Logical Channel Prioritization procedure performed by the MAC entity when a new transmission is performed.

R2-165006 investigates NR user plane architecture.

### SUMMARY

It is an object of the invention to provide a method and a terminal device for allocating logical channel resources, which can effectively utilize granted resources and rapidly process data packets of a logical channel that a function of segmenting data units is disabled. This object is solved by the subject-matter of the independent claims. Embodiments representing specific realisations of the invention are defined in the dependent claims.

In a first aspect, a method for allocating logical channel resources is provided, including: determining a priority of at least one logical channel and total resources allocated to the at least one logical channel, the at least one logical channel includes a first logical channel that does not have a function of segmenting a data unit; allocating a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units, and the size of the first resource is smaller than or equal to a product of a priority bit rate (PBR) and a transmission time interval (TTI) of the first logical channel, and *n* is a positive integer; transmitting the *n* data units by the first resource;
wherein the at least one logical channel includes a third logical channel that does not have the function of segmenting the data unit, the priority of the first logical channel is equal to a priority of the third logical channel; and
when a size of first padding bits is smaller than a size of second padding bits,
before the allocating a first resource in the total resources to the first logical channel according to a priority of the first logical channel and data units carried on the first logical channel, the method further includes:
allocating the fifth resource having a size equal to the size of the 1 data units to the third logical channel; and
the allocating a first resource in the total resources to the first logical channel according to a priority of the first logical channel and data units carried on the first logical channel includes:
   allocating the first resource having a size larger than the size of the n data units to the first logical channel;
   when a size of first padding bits is larger than a size of second padding bits,
   the allocating a first resource in the total resources to the first logical channel according to a priority of the first logical channel and data units carried on the first logical channel includes:
      allocating the first resource having a size equal to the size of the n data units to the first logical channel, and
      after the allocating a first resource in the total resources to the first logical channel according to a priority of the first logical channel and data units carried on the first logical channel, the method further includes:
         allocating the fifth resource having a size larger than the size of the 1 data units to the third logical channel.

Therefore, method for allocating logical channel resources in an embodiment of the present application allocates resources to a logical channel that does not have the function of segmenting data units, and the allocated resources are satisfied to be larger than or equal to sizes of an integer number of data units and smaller than a size of PBR^{∗}TTI of the logical channel, thus realizing a rapid allocation of resources to a logical channel that a function of segmenting is disabled, and also making more efficient use of granted resources.

With reference to the first aspect, in an embodiment of the first aspect, a size of *n*+1 data units carried on the first logical channel is larger than the size of the first resource.

It should be understood that for a logical channel that the function of segmenting data units is disabled, the allocated resources satisfy that a maximum integer number of data units can be transmitted, which can maximum utilization of the resources for transmitting data unit.

With reference to the first aspect of the invention and the above embodiment thereof, in another embodiment of the first aspect, the at least one logical channel includes a second logical channel that has the function of segmenting the data unit, and the method further includes: allocating a second resource for transmitting m data units carried on the second logical channel in the total resources to the second logical channel according to a priority of the second logical channel and data units carried on the second logical channel, a size of the *m* data units is equal to a size of the second resource, and *m* is a positive number.

It should be understood that *m* being a positive number includes that *m* may be a positive integer, or *m* may be a decimal, wherein when the *m* is a decimal, it indicates a ratio of segmentation for a logical channel. For example, *m*=2.5 indicates that the second resource transmits two complete data units and one half of a third data unit, that is, the third data unit is segmented and then is transmitted.

With reference to the first aspect of the invention and the above embodiments thereof, in another embodiment, the size of the *n* data units is smaller than the size of the first resource, and the transmitting the *n* data units by the first resource includes: transmitting, by the first resource, the *n* data units carried on the first logical channel and the first padding bits.

It should be understood that when the first resource allocated to the first logical channel is larger than the size of the *n* data units, padding bits may be used since the logical channel cannot segment the data units.

With reference to the first aspect of the invention and the above embodiments thereof, in another embodiment, the priority of the first logical channel is larger than or equal to the priority of the second logical channel, the allocating a first resource in the total resources to the first logical channel according to a priority of the first logical channel and data units carried on the first logical channel includes: allocating, at a first moment, the first resource having a size equal to the size of the *n* data units to the first logical channel according to the data units carried on the first logical channel, and the size of the *n*+1 data units carried on the first logical channel is larger than the product of the PBR and the TTI of the first logical channel; and the allocating a second resource in the total resources to the second logical channel according to a priority of the second logical channel and data units carried on the second logical channel includes: allocating, at a second moment, a second resource to the second logical channel according to the size of the first resource and the data units carried on the second logical channel, the second resource is all or part of remaining resources except the first resource in the total resources, and the second moment is after the first moment.

In a plurality of logical channels, both the first logical channel that does not have a function of segmenting a data unit and the second logical channel that has a function of segmenting a data unit are included, and when the priority of the first logical channel is larger than or equal to the priority of the second logical channel, the remaining resources are always allocated to the first logical channel in preference to the second logical channel, to which the remaining resources are allocated. By analogy, if the at least one logical channel includes multiple first logical channels and multiple second logical channels, and the priorities of the first logical channels are larger than or equal to the priorities of the second logical channels, similar to the above allocation scheme, it is always to preferentially allocate for the first logical channels that does not have the function of segmenting data units and then to allocate for the second logical channels that has the function of segmenting data units.

With reference to the first aspect of the invention and the above embodiments thereof, in another embodiment, if the priority of the first logical channel is smaller than the priority of the second logical channel, allocating, at a third moment, the second resource to the second logical channel, the size of the second resource is equal to a product of a PBR and a TTI of the second logical channel, and allocating, at a fourth moment, the first resource to the first logical channel, the third moment is before the fourth moment.

With reference to the first aspect of the invention and the above embodiments thereof, in another embodiment, the allocating a first resource in the total resources to the first logical channel according to a priority of the first logical channel and data units carried on the first logical channel includes: allocating, at the fourth moment, the first resource having a size equal to the size of the *n* data units to the first logical channel according to the data units carried on the first logical channel, and the size of *n*+1 data units carried on the first logical channel is larger than the product of the PBR and the TTI of the first logical channel, and the first resource is all or part of remaining resources except the second resource in the total resources. The method further includes: allocating, at a fifth moment, a third resource to the second logical channel, the fifth moment is after the fourth moment, and the third resource is all or part of remaining resources except the first resource and the second resource in the total resources.

With reference to the first aspect of the invention and the above embodiments thereof, in another embodiment, the method further includes: allocating, at a sixth moment, a fourth resource to the first logical channel, the sixth moment is after the fifth moment, and the fourth resource is the remaining resources except the first resource, the second resource, and the third resource in the total resources.
With reference to the first aspect of the invention, in another embodiment, the method further includes:
determining a difference between the size of the n data units and the size of the first resource to be the size of the first padding bits, if a fifth resource having a size equal to a size of 1 data units carried on the third logical channel is firstly allocated to the third logical channel and then the first resource having a size larger than the size of the n data units is allocated to the first logical channel, and the size of the fifth resource is smaller than or equal to a product of a PBR and a TTI of the third logical channel; and
determining a difference between the size of the 1 data units and the size of the fifth resource to be the size of the second padding bits, if the first resource having a size equal to the size of the n data units is firstly allocated to the first logical channel and then the fifth resource having a size larger than the size of the 1 data units is allocated to the third logical channel.

It should be understood that when all of the plurality of logical channels do not have a function of segmenting a data unit, a terminal device may refer to an existing ordering rule of logical channel prioritization (LCP) and allocate resources to each logical channel according to the priorities of the plurality of logical channels, and when there are two or more logical channels having a same priority among the plurality of logical channels, resource allocation may be performed according to a principle that allows padding bits to be minimum, that is, sizes of padding bits corresponding to resource allocation performed according to different sequences are calculated respectively, a minimum value of the padding bits is determined, and resource allocation is performed according to the corresponding resource allocation method.

In a second aspect of the invention, a terminal device is provided for performing the method according to the invention or of any of the possible embodiments of the first aspect of the invention as described above. Specifically, the terminal device includes units for performing the method of the first aspect of the invention or of any of the possible embodiments as described above.

### BRIEF DESCRIPTION OF THE DRAWINGS

FIG. 1 is a schematic diagram of segmentation and concatenation operations in LTE according to an embodiment of the present application.
FIG. 2 is a schematic flowchart of a method 100 for allocating logical channel resources according to an embodiment of the present application.
FIG. 3 is a schematic diagram of allocating resources to one logical channel according to an embodiment of the present application.
FIG. 4 is a schematic diagram of allocating resources to two logical channels according to an embodiment of the present application.
FIG. 5 is another schematic diagram of allocating resources to two logical channels according to an embodiment of the present application.
FIG. 6 is still another schematic diagram of allocating resources to two logical channels according to an embodiment of the present application.
FIG. 7 is a schematic block diagram of a terminal device according to an embodiment of the present application.
FIG. 8 is a schematic block diagram of a terminal device according to another embodiment of the present application.

### DETAILED DESCRIPTION

The technical solutions in the embodiments of the present application will be described below with reference to the accompanying drawings.

In the LTE system, when a transmission resource provided by the MAC is larger than a size of one RLC SDU, RLC may concatenate multiple RLC SDUs together to form an RLC PDU, so that the resource can be fully utilized; when a resource provided by the MAC layer is smaller than a size of one RLC SDU or a resource provided by the MAC layer is larger than a size of one RLC SDU but cannot transmit an integer number of RLC SDUs, RLC needs to segment the RLC SDU so that the resource provided by the MAC layer is enabled to be fully utilized.

In addition, according to a logical channel prioritization (LCP), Radio Resource Control (RRC) configures each logical channel (LC) with three parameters: priority, priority bit rate (PBR) and bucket size duration (BSD), in the process of allocating resources to different logical channels. The MAC layer determines the sequence in which resources are obtained by each logical channel according to these three parameters.

Specifically, the priority determines the sequence in which the data in the logical channel is scheduled, and the greater the priority is, the lower the priority is. The PBR determines the size of resource allocated to each scheduled logical channel; the PBR and the BSD determine an upper limit of the resources that can be scheduled by each logical channel. In addition to these three parameters configured by RRC, a MAC entity maintains a variable Bj for each logical channel, and the initial value of Bj is set to 0, which increases with the increase of the Transmission Time Interval (TTI) and increases by PBR^{∗}TTI each time with an upper limit of PRB^{∗}BSD.

The LTE MAC protocol specifies a logical channel priority process. When a user equipment (UE) obtains an uplink resource grant, the UE allocates the granted resources to different logical channels according to the specified logical channel priority process which mainly consists of the following steps:
Step 1: sequencing all logical channels with Bj>0, according to the priority, so that resources of PBR^{∗}TTI are allocated to each logical channel in accordance with a sequence of priority from high to low. If the PBR of a certain logical channel is set to infinity by RRC, sufficient resources are allocated to the logical channel by the MAC before other services with lower priorities are served, so that the data of the logical channel is completely scheduled.
Step 2: updating the value of Bj by a MAC entity, and subtracting a total size of the served Radio Link Control (RLC) protocol data unit (PDU) of the corresponding logical channel from Bj;
Step 3: sequencing all the logical channels regardless of the size of Bj according to the priority and scheduling them in sequence, after Step 1 is performed and if there still remain granted resources. For each logical channel, only after data of the logical channel is completely scheduled or all remaining granted resources are used up, the next logical channel is continued to be served.

It is worth noting that after the priority is determined, when resources are allocated to each logical channel, it is also necessary to follow some criteria specified by the protocol: if a SDU can entirely fill the allocated resources, RLC shall not segment the SDU; if a SDU needs to be segmented, the segmentation method shall satisfy that the segmented part is enabled to maximize the utilization of the allocated resources.

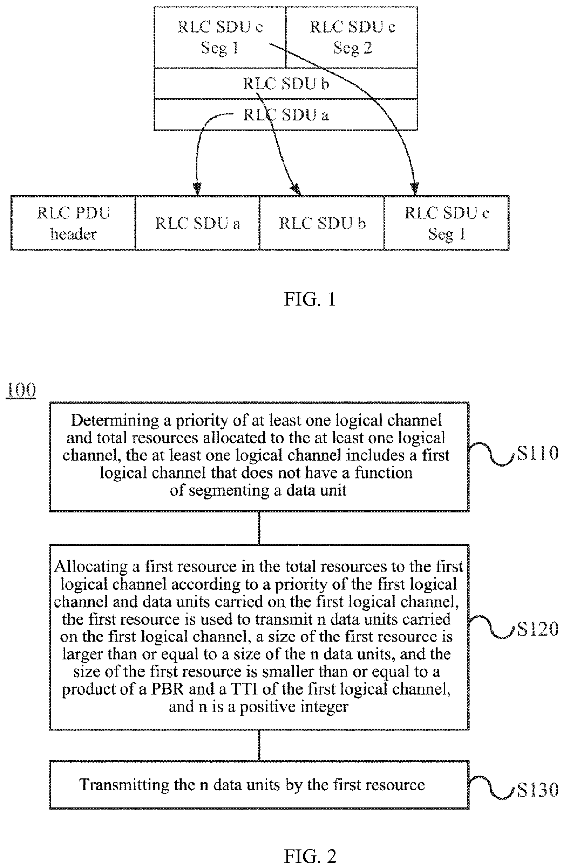

Specifically, FIG. 1 shows a schematic diagram of segmentation and concatenation operations in LTE according to an embodiment of the present application. As shown in FIG. 1, for three RLC SDUs, i.e., RLC SDU a, RLC SDU b, and RLC SDU c, a size of resources provided by the MAC layer can transmit the entire RLC SDU a and the entire RLC SDU b, but a size of remaining resources is smaller than a size of the entire RLC SDU c. Therefore the RLC SDU c can be segmented into two segments, i.e., RLC SDU c Seg 1 and RLC SDU c Seg 2, where a size of the RLC SDU c Seg 1 is equal to a size of the remaining resources, that is, the RLC SDU a, the RLC SDU b, and the RLC SDU c Seg 1 are assembled into an RLC PDU according to the size of the resources provided by the MAC layer, so that the resources provided by the MAC layer are fully utilized. Optionally, the assembled RLC PDU may further include an RLC PDU header portion.

However, in the NR system, the concatenation function has been removed from the RLC layer, and the RLC layer can initiate an assembling of an RLC PDU without obtaining a resource grant of the MAC layer. In this case, once the RLC layer obtains a resource grant of the MAC layer, the already assembled RLC PDU can be sent to the MAC layer to be further assembled into a PDU of the MAC layer.

The segmentation operation is still retained in the NR RLC, that is, if there are remaining resources, an RLC SDU can also be segmented to entirely fill the granted resources. Retaining the segmentation operation of RLC can also introduce time delay. For example, an already assembled RLC PDU needs to be re-segmented due to its failure to entirely fill the granted resources of the MAC layer. Therefore, it can be considered to configure the segmentation function of some logical channels to be disabled. Disabling a segmentation function may affect the existing LCP, for example, the additional padding may be introduced. Therefore, an embodiment of the present invention provides a method for allocating logical channel resources, which can improve the existing logical channel resource allocation rules.

FIG. 2 shows a schematic flowchart of a method 100 for allocating logical channel resources according to an embodiment of the present application. The method 100 can be performed by a terminal device. Specifically, the method 100 includes:
S110: determining a priority of at least one logical channel and total resources allocated to the at least one logical channel, the at least one logical channel includes a first logical channel that does not have a function of segmenting a data unit;
S120: allocating a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units, and the size of the first resource is smaller than or equal to a product of a PBR and a TTI of the first logical channel, and *n* is a positive integer;
S130: transmitting the *n* data units by the first resource.

Specifically, the terminal device may determine at least one logical channel, and the at least one logical channel may include a first logical channel that does not have a function of segmenting a data unit, and may further include a second logical channel that has a function of segmenting a data unit. The terminal device may allocate a granted resource to the at least one logical channel according to a priority of the at least one logical channel, where a first resource allocated to the first logical channel for transmitting *n* data units carried on the first logical channel satisfies: a size of the first resource is larger than or equal to a size of the *n* data units, and the size of the first resource is smaller than or equal to the product of the PBR and the TTI of the first logical channel, where *n* is a positive integer, that is, the first resource is used to transmit an integer number of data units carried on the logical channel.

Therefore, a method for allocating logical channel resources in an embodiment of the present application allocates resources to a logical channel that does not have a function of segmenting a data unit, and the allocated resources are satisfied to be larger than or equal to sizes of an integer number of data units and smaller than a size of PBR^{∗}TTI of the logical channel, thus realizing a rapid allocation of resources to a logical channel that a function of segmenting is disabled, and also making more efficient use of granted resources.

It should be understood that the technical solutions of embodiments of the present application can be applied to various communication systems, such as a Global System of Mobile communication (GSM) system, a Code Division Multiple Access (CDMA) system, a Wideband Code Division Multiple Access (WCDMA) system, General Packet Radio Service (GPRS), a LTE system, a LTE Frequency Division Duplex (FDD) system, LTE Time Division Duplex (TDD), a Universal Mobile Telecommunication System (UMTS), or a Worldwide Interoperability for Microwave Access (WiMAX) communication system, etc.

In an embodiment of the present application, a terminal device may include, but is not limited to, a mobile station (MS), a mobile terminal, a mobile telephone, a user equipment (UE), a handset and a portable equipment, a vehicle, etc. The terminal device can communicate with one or more core networks via a Radio Access Network (RAN), for example, the terminal device can be a mobile phone (or referred to as a "cellular" telephone), a computer with wireless communication capabilities, etc. The terminal device can also be portable, pocket-sized, handheld, computer-integrated or in-vehicle mobile apparatus.

In S110, determining a priority of at least one logical channel and total resources allocated to the at least one logical channel, the at least one logical channel includes a first logical channel, and the first logical channel does not have a function of segmenting a data unit. The at least one logical channel may further include a second logical channel that has a function of segmenting a data unit.

It should be understood that the first logical channel does not have a function of segmenting a data unit, that is, the segmentation function of the logical channel is disabled, and correspondingly, the second logical channel has a function of segmenting a data unit, that is, the segmentation function of the logical channel is enabled. Enabling and disabling the segmentation function may be non-configurable, that is, the first logical channel all disables the segmentation function by default under any conditions, and the second logical channel all enables the segmentation function by default under any conditions, but embodiments of the present application are not limited thereto.

It should be understood that the data unit may be an RLC SDU, or an RLC PDU after the RLC SDU is encapsulated, and the RLC PDU may include a PDU header and an RLC SDU; or the data unit may be other forms of data units. Embodiments of the present application are not limited thereto. For convenience of description, an RLC SDU is taken as an example in the following embodiments.

In S120, allocating a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units, and the size of the first resource is smaller than or equal to a product of a PBR and a TTI of the first logical channel, and *n* is a positive integer. In S130, transmitting the *n* data units by the first resource.

It should be understood that for any one logical channel of the at least one logical channel, the logical channel may include a plurality of data units. For example, as shown in FIG. 1, the logical channel includes three data units, which are respectively RLC SDU a, RLC SDU b and RLC SDU c. That is, the first logical channel may also include at least one logical channel, and according to the priority of the first logical channel and data units carried on the first logical channel, a first resource may be allocated to the first logical channel, and may transmit *n* data units carried on the first logical channel, where the *n* data units may be all or part of the logical channels of the first logical channel.

Considering resource utilization, the first resource allocated to the logical channel should also satisfy that: a size of the *n*+1 data units carried on the first logical channel is larger than a size of the first resource, that is, the determined value of *n* is a maximum value that allows the first resource to be fully utilized.

It should be understood that when the first resource allocated to the first logical channel is larger than the size of the *n* data units, the padding bits may be used since the logical channel cannot segment the data units. That is to say, the *n* data units carried on the first logical channel and first padding bits are transmitted by the first resource, a size of the first padding bits is equal to the difference between the size of the first resource and the size of the *n* data units.

In an embodiment of the present application, for the second logical channel that has a function of segmenting a data unit in the at least one logical channel, the terminal device may further allocate a second resource for transmitting *m* data units carried on the second logical channel in the total resources to the second logical channel according to the priority of the second logical channel and the data unit carried on the second logical channel, a size of the *m* data units is equal to a size of the second resource, and *m* is a positive number.

It should be understood that *m* being a positive number includes that *m* may be a positive integer, or *m* may be a decimal, wherein when the *m* is a decimal, it indicates a ratio of segmentation for a logical channel. For example, *m*=2.5 indicates that the second resource transmits two complete data units and one half of a third data unit, that is, the third data unit is segmented and then is transmitted.

In an embodiment of the present application, since the at least one logical channel includes a first logical channel that does not have a function of segmenting a data unit, and further may include a second logical channel that has a function of segmenting a data unit, therefore, when the resource is allocated to the at least one logical channel, the allocation may be performed according to a priority of the at least one logical channel and a size of data units carried on each logical channel.

Optionally, as an embodiment, when the at least one logical channel only includes one logical channel that does not have a function of segmenting a data unit, the terminal device allocates all granted resources to the logical channel, and the resource may transmit a maximum integer number of data units carried on the logical channel. Since the logical channel cannot segment a data unit, for remaining resources, they can be filled by the padding bits.

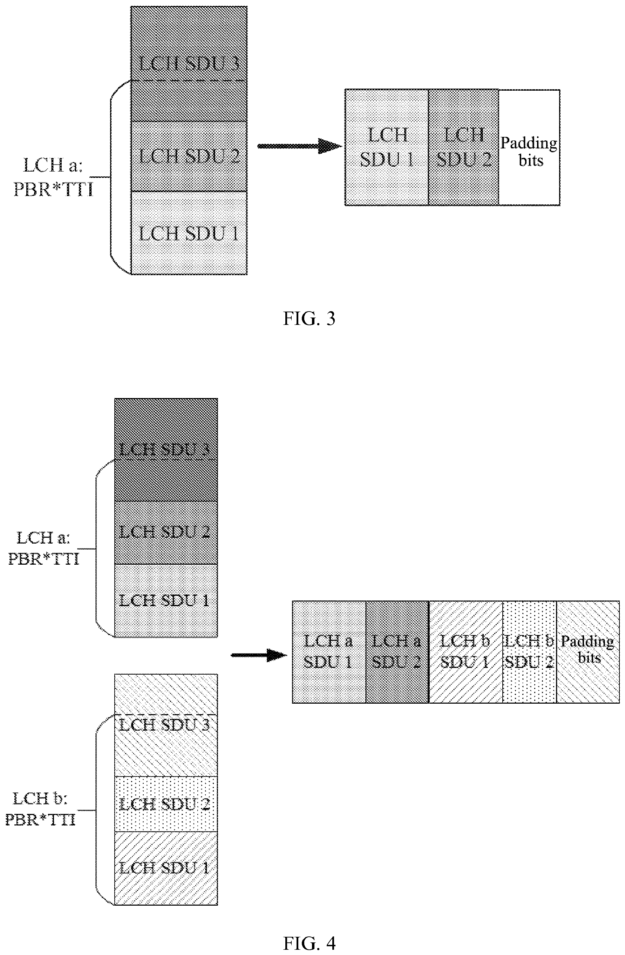

For example, FIG. 3 shows a schematic diagram of allocating resources to one logical channel according to an embodiment of the present application. Specifically, the terminal device allocates resources to the first logical channel that does not have a function of segmenting a data unit. As shown in FIG. 3, the first logical channel may be represented as LCH a, and the LCH a may include multiple data units. For example, in FIG. 3, the LCH a including three data units is taken as an example, which are respectively represented as LCH SDU 1, LCH SDU 2, and LCH SDU 3.

Since only one logical channel LCH a is included, granted resources of the terminal device are all used to transmit data carried on the LCH a, and it is assumed that the granted resource allocated by the terminal device is equal to the value of PBR^{∗}TTI of the LCH a, that is, the size of the first resource allocated to the first logical channel is equal to PBR^{∗}TTI of the first logical channel, and a size of PBR^{∗}TTI is as shown in FIG. 3, that is to say, the size of the first resource is larger than the sum of the sizes of the LCH SDU 1 and the LCH SDU 2, and the size of the first resource is smaller than the sum of sizes of the three data units of the LCH SDU 1, the LCH SDU 2, and the LCH SDU 3.

Therefore, the first resource can be used to transmit at most the two data units LCH SDU 1 and LCH SDU 2 carried on the first logical channel LCH a, and remaining part of resources are filled by the padding bits since the first logical channel does not have a function of segmenting a data unit.

Optionally, as an embodiment, the at least one logical channel may be a plurality of logical channels which all do not have logical channel that has a function of segmenting a data unit, and the terminal device may refer to an existing LCP rule and allocate resources to each logical channel according to the priorities of the plurality of logical channels, and when there are two or more logical channels having a same priority among the plurality of logical channels, resource allocation may be performed according to a principle that allows padding bits to be minimum, that is, sizes of padding bits corresponding to resource allocation performed according to different sequences are calculated respectively, a minimum value of the padding bits is determined, and resource allocation is performed according to the corresponding resource allocation method.

Here taking two logical channels that do not have a function of segmenting a data unit as an example, the at least one logical channel includes a first logical channel and a third logical channel, neither the first logical channel nor the third logical channel can segment a data unit, and a priority of the first logical channel is equal to a priority of the third logical channel. Specifically, FIG. 4 shows a schematic diagram of allocating resources to two logical channels according to an embodiment of the present application, where the first logical channel is represented as LCH a, and the third logical channel is represented as LCH b, and the priority of LCH a and the priority of LCH b are equal. Both LCH a and LCH b may include a plurality of data units. Here taking both LCH a and LCH b including three data units as an example for illustration, as shown in FIG. 4, the three data units included in LCH a and LCH b are respectively represented as LCH SDU 1, LCH SDU 2, and LCH SDU 3.

When the terminal device allocates the granted resources to LCH a and LCH b, since the priority of LCH a and priority of LCH b are equal, therefore, it may respectively calculate a size of first padding bits needed when resources are firstly allocated to LCH a and then allocated to the LCH b and a size of second padding bits needed when resources are firstly allocated to LCH b and then allocated to LCH a. By comparing the size of the first padding bits and the size of the second padding bits, resources are allocated according to the allocation scheme corresponding to less padding bits.

It is assumed here that values of PBR^{∗}TTI of LCH a and LCH b are respectively as shown in FIG. 4, that is, both of the values of PBR^{∗}TTI of LCH a and LCH b are satisfied to be larger than a size of two data units and smaller than a size of three data units. The terminal device calculates the size of the first padding bits needed when resources are firstly allocated to LCH a and then allocated to LCH b. Since neither LCH a nor LCH b has a function of segmenting a data unit, the resources firstly allocated to LCH a may be smaller than or equal to a size of PBR^{∗}TTI of the LCH a. According to the size of PBR^{∗}TTI of LCH a, the size of the resources allocated to LCH a is equal to the size of two data units, and then the remaining resources are allocated to LCH b. Assuming that the remaining resources are larger than the sum of sizes of two data units LCH SDU 1 and LCH SDU 2 in LCH b and smaller than the sum of sizes of three data units LCH SDU 1, LCH SDU 2 and LCH SDU 3, the remaining resources can be used to transmit the two data units LCH SDU 1 and LCH SDU 2 of LCH b, and the rest is filled by the first padding bits, thus the size of the first padding bits are determined. Similarly, the terminal device can also calculate the size of the second padding bits needed when resources are firstly allocated to LCH b and then allocated to LCH a.

The size of the first padding bits is compared to the size of the second padding bits. If the first padding bits are smaller than the second padding bits, resources are firstly allocated to LCH a, and then allocated to LCH b; if the second padding bits are smaller than the first padding bits, resources are firstly allocated to LCH b and then allocated to LCH a.

Optionally, as an embodiment, when at least one logical channel to which resources are allocated by the terminal device includes both a logical channel that has a function of segmenting a data unit and a logical channel that does not have function of segmenting a data unit, resources can be allocated to logical channels according to the priority. The following is an example in which the at least one logical channel includes two logical channels, which are a first logical channel that does not have the function of segmenting a data unit and a second logical channel that has the function of segmenting a data unit.

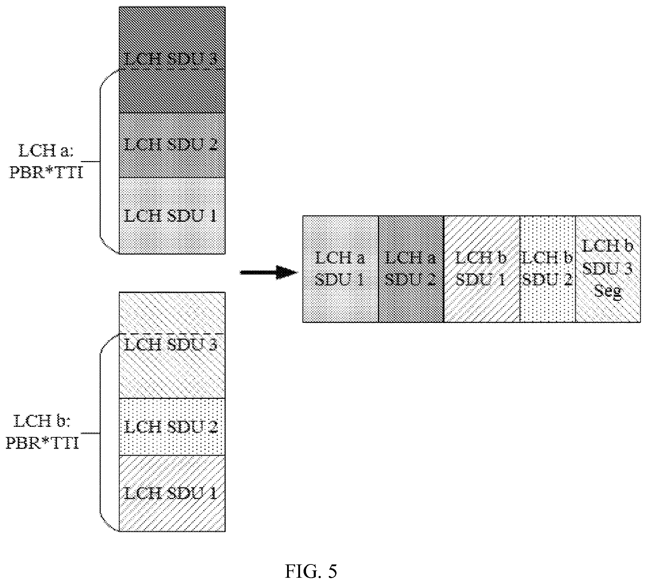

Optionally, as an embodiment, when a priority of the first logical channel is larger than or equal to a priority of the second logical channel, resources are preferentially allocated to the first logical channel, and then resources are allocated to the second logical channel. Specifically, FIG. 5 shows another schematic diagram of allocating resources to two logical channels according to an embodiment of the present application, where the first logical channel is represented as LCH a, the second logical channel is represented as LCH b, and a priority of LCH a and a priority of LCH b are equal, or a priority of LCH a is larger than a priority of LCH b. Both LCH a and LCH b may include a plurality of data units. Here taking both LCH a and LCH b including three data units as an example for illustration, as shown in FIG. 5, the three data units included in LCH a and LCH b are respectively represented as LCH SDU 1, LCH SDU 2, and LCH SDU 3.

When allocating granted resources to LCH a and LCH b, the terminal device preferentially allocates resources to the first logical channel LCH a and then to the second logical channel LCH b. Specifically, a size of a first resource allocated to LCH a satisfied to be: smaller than or equal to PBR^{∗}TTI of LCH a and equal to a size of a maximum integer number of data units. As shown in FIG. 5, since the value of PBR^{∗}TTI of LCH a is larger than the sum of sizes of the two data units LCH SDU 1 and LCH SDU 2, and is smaller than the sum of sizes of the three data units LCH SDU 1, LCH SDU 2, and LCH SDU 3, thus the size of the first resource allocated to LCH a is equal to the sum of the sizes of LCH SDU 1 and LCH SDU 2.

After allocating the first resource to the first logical channel LCH a, then the terminal device allocates the remaining resources except the first resource in the total resources to the second logical channel LCH b. Since LCH b has a segmentation function, therefore a size of a second resource that can be allocated to LCH b is equal to the value of PBR^{∗}TTI of LCH b. If the remaining resources are smaller than PBR^{∗}TTI, all the remaining resources are allocated to LCH b. For the second resource allocated to LCH b, assuming that a size of the second resource is equal to the PBR^{∗}TTI, and as shown in FIG. 5, the PBR^{∗}TTI is larger than the sum of sizes of the two data units LCH SDU 1 and LCH SDU 2 in the LCH b and smaller than the sum of sizes of the three data units LCH SDU 1, LCH SDU 2 and LCH SDU 3, since LCH b has a segmentation function, therefore data units of LCH b can be segmented according to a size of PBR^{∗}TTI. That is to say, the second resource transmits LCH SDU 1, LCH SDU 2 and segmented portion LCH SDU 3 Seg of LCH SDU 3 carried on LCH b. Similarly, when the second resource is smaller than the PBR^{∗}TTI, segmentation can also be performed on LCH b according to the size of the second resource.

By analogy, if the at least one logical channel includes multiple first logical channels and multiple second logical channels, and the priorities of the first logical channels are larger than or equal to the priorities of the second logical channels, similar to the above allocation scheme, it is always to preferentially allocate for the first logical channels that does not have the function of segmenting a data unit and then to allocate for the second logical channels that has the function of segmenting a data unit.

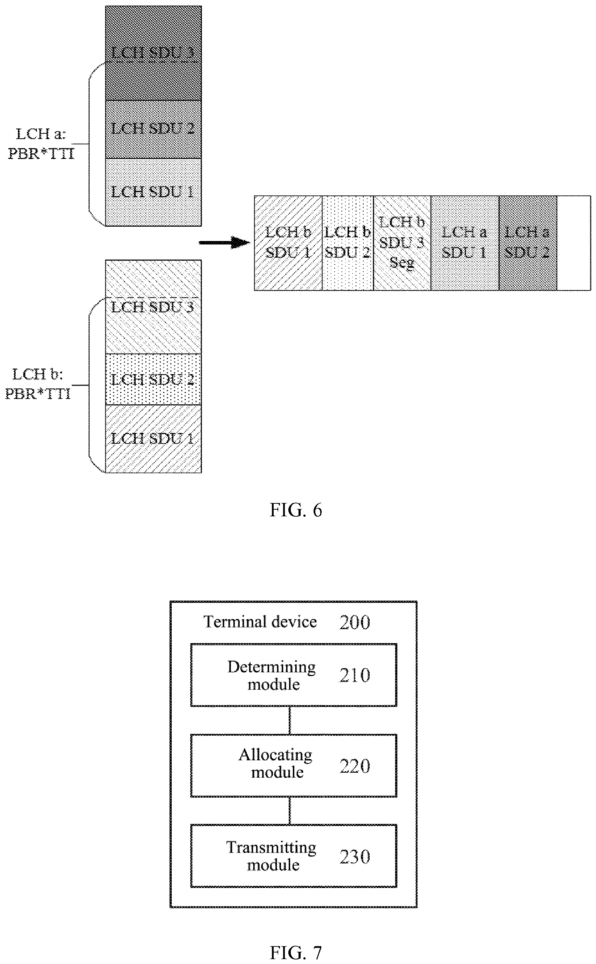

Optionally, as an embodiment, when a priority of a first logical channel is smaller than a priority of a second logical channel, resources are allocated firstly to the second logical channel and then to the first logical channel according to the priority sequence. Specifically, FIG. 6 shows still another schematic diagram of allocating resources to two logical channels according to an embodiment of the present application, where the first logical channel is represented as LCH a, and the second logical channel is represented as LCH b, and a priority of LCH a is smaller than a priority of LCH b. Both LCH a and LCH b may include a plurality of data units. Here taking both LCH a and LCH b including three data units as an example for illustration, as shown in FIG. 6, the three data units included in LCH a and LCH b are respectively represented as LCH SDU 1, LCH SDU 2, and LCH SDU 3.

When allocating granted resources to LCH a and LCH b, the terminal device preferentially allocates resources to the second logical channel LCH b and then to the first logical channel LCH a. Specifically, since LCH b has a segmentation function, the second resource may be allocated to LCH b according to the size of PBR^{∗}TTI, that is, the size of the second resource is equal to the size of PBR^{∗}TTI. As shown in FIG. 6, assuming that PBR^{∗}TTI of LCH b is larger than the sum of sizes of the two data units LCH SDU 1 and LCH SDU 2 in LCH b, and is smaller than the sum of sizes of the three data units LCH SDU 1, LCH SDU 2 and LCH SDU 3, then data units of LCH b are segmented according to a size of the PBR^{∗}TTI. That is to say, the second resource transmits LCH SDU 1, LCH SDU 2 and a segmented portion LCH SDU 3 Seg of the LCH SDU 3 carried on LCH b.

After the terminal device allocates the second resource to the second logical channel LCH b, then the remaining resources except the second resource in the total resource are allocated to the first logical channel LCH a. If a size of the remaining resource is smaller than or equal to the size of PBR^{∗}TTI of LCH a, then a size of the first resource allocated to LCH a is equal to a maximum integer number of data units carried on LCH a, and the size of the maximum integer number of data units carried on LCH a is smaller than or equal to the remaining resources; if the size of the remaining resource is larger than the size of the PBR^{∗}TTI of LCH a, then the size of the first resource allocated to LCH a is equal to a maximum integer number of data units carried on LCH a, and the size of the maximum integer number of data units carried on LCH a is smaller than or equal to the size of the PBR^{∗}TTI of LCH a.

For example, as shown in FIG. 6, assuming that the size of the remaining resources except the second resource in the total resources is equal to two data units carried on LCH a, or larger than two data units carried on LCH a and smaller than three data units carried on LCH a, then the first resource allocated to LCH a is used to transmit two data units LCH SDU 1 and LCH SDU 2 carried on LCH a.

If there are still remaining resources in the total resources after the second resource and the first resource are allocated according to the above procedure, then the resources are continued to be allocated to LCH b. Specifically, as shown in FIG. 6, assuming that there still exist remaining resources in the total resources except the second resource and the first resource, then a third resource is continued to be allocated to LCH b. If the remaining resources are smaller than a size of data units that are included in LCH b and are not transmitted, then a size of the third resource is equal to a size of the remaining resources, that is, data units of LCH b can be segmented according to the size of the remaining resources so that the remaining resources are fully utilized; if the remaining resources are large enough and can transmit all data units that are included in LCH b and are not transmitted, that is, there still exists remaining resources in the remaining resources after the third resource for transmitting all data units carried on LCH b is allocated to the LCH b, then a fourth resource can be continued to be allocated to LCH a.

When the terminal device allocates the fourth resource to LCH a, if the fourth resource can transmit an integer number of data units carried on LCH a, a maximum integer number of data units are transmitted according to a size of the fourth resource; if there still exist remaining resources after the integer number of data units is transmitted and the remaining resources are insufficient to transmit other data units carried on the LCH a, it can be filled by the padding bits, but embodiments of the present application are not limited thereto.

It should be understood that, in embodiments of the present application, the location of a MAC subheader is not limited. That is to say, the location and size of the MAC subheader may change according to the discussion of standardization, and embodiments of the present application are not limited thereto.

Therefore, the method for allocating logical channel resources provided in embodiments of the present application, according to priority of logical channel, can allocate the resources to a logical channel that does not have a function of segmenting a data unit, and the allocated resources satisfies to be larger than or equal to sizes of an integer number of data units and smaller than the size of PBR^{∗}TTI of the logical channel, and it is also possible to allocate resources to a logical channel that has a function of segmenting a data unit, thus realizing a rapid allocation of resources to a logical channel that a function of segmenting is disabled, and improving the efficiency of resource allocation while ensuring more efficient use of granted resources.

It should be understood that, in various embodiments of the present application, sizes of serial numbers of each of the processes described above do not mean an order of execution, and the order of execution of each of process should be determined by its function and internal logic, and should not constitutes any limitation to the implementation process of embodiments of the present application.

The method for allocating logical channel resources according to embodiments of the present application is described in detail above with reference to FIG. 1 to FIG. 6. The terminal device according to embodiments of the present application will be described below with reference to FIG. 7 to FIG. 8.

As shown in FIG. 7, a terminal device 200 according to an embodiment of the present application includes:
a determining module 210 configured to determine a priority of at least one logical channel and total resources allocated to the at least one logical channel, the at least one logical channel includes a first logical channel that does not have a function of segmenting a data unit;
an allocating module 220 configured to allocate a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units, and the size of the first resource is smaller than or equal to a product of a priority bit rate (PBR) and a transmission time interval (TTI) of the first logical channel, and *n* is a positive integer;
a transmitting module 230 configured to transmit the *n* data units by the first resource.

Therefore, the terminal device provided in an embodiment of the present application allocates resources to a logical channel that does not have a function of segmenting a data unit, and the allocated resources are satisfied to be larger than or equal to sizes of an integer number of data units and smaller than a size of PBR^{∗}TTI of the logical channel, thus realizing a rapid allocation of resources to a logical channel that a function of segmenting is disabled, and also making more efficient use of granted resources.

Optionally, as an embodiment, a size of *n*+1 data units carried on the first logical channel is larger than the size of the first resource.

Optionally, as an embodiment, the at least one logical channel includes a second logical channel, the second logical channel has a function of segmenting a data unit, and the allocating module 220 is further configured to: allocate a second resource for transmitting m data units carried on the second logical channel in the total resources to the second logical channel according to a priority of the second logical channel and data units carried on the second logical channel, a size of the *m* data units is equal to a size of the second resource, and *m* is a positive number.

Optionally, as an embodiment, the size of the *n* data units is smaller than the size of the first resource, and the transmitting module 230 is configured to: transmit, by the first resource, the *n* data units carried on the first logical channel and first padding bits, a size of the first padding bits is equal to the difference between the size of the *n* data units and the size of the first resource.

Optionally, as an embodiment, the priority of the first logical channel is larger than or equal to the priority of the second logical channel, and the allocating module 220 is specifically configured to: allocate, at a first moment, the first resource having a size equal to a size of the *n* data units to the first logical channel according to data units carried on the first logical channel, and the size of *n*+1 data units carried on the first logical channel is larger than the product of a PBR and a TTI of the first logical channel; and allocate, at a second moment, a second resource to the second logical channel according to the size of the first resource and the data units carried on the second logical channel, the second resource is all or part of remaining resources except the first resource in the total resource, and the second moment is after the first moment.

Optionally, as an embodiment, if the priority of the first logical channel is smaller than the priority of the second logical channel, the second resource is allocated to the second logical channel at a third moment, the size of the second resource is equal to a product of a PBR and a TTI of the second logical channel, and the first resource is allocated to the first logical channel at a fourth moment, the third moment is before the fourth moment.

Optionally, as an embodiment, the allocating module 220 is configured to: allocate, at the fourth moment, the first resource having a size equal to a size of the *n* data units to the first logical channel according to data units carried on the first logical channel, and the size of *n*+1 data units carried on the first logical channel is larger than the product of the PBR and the TTI of the first logical channel, the first resource is all or part of remaining resources except the second resource in the total resources; allocate, at a fifth moment, a third resource to the second logical channel, the fifth moment is after the fourth moment, the third resource is all or part of remaining resources except the first resource and the second resource in the total resources.

Optionally, as an embodiment, the allocating module 220 is specifically configured to: allocate, at a sixth moment, a fourth resource to the first logical channel, the sixth moment is after the fifth moment, the fourth resource is the remaining resources except the first resource, the second resource, and the third resource in the total resources.

Optionally, as an embodiment, the at least one logical channel includes a third logical channel that does not have a function of segmenting a data unit, a priority of the first logical channel is equal to a priority of the third logical channel, and the determining module 210 is specifically configured to: determine a difference between the size of the *n* data units and the size of the first resource to be a size of first padding bits, if a fifth resource having a size equal to a size of *l* data units carried on the third logical channel is firstly allocated to the third logical channel and then the first resource having a size larger than the size of the *n* data units is allocated to the first logical channel, the size of the fifth resource is smaller than or equal to a product of PBR and TTI of the third logical channel; and determine a difference between the size of the *l* data units and the size of the fifth resource to be a size of second padding bits, if the first resource having a size equal to the size of the *n* data units is firstly allocated to the first logical channel and then the fifth resource having a size larger than the size of the *l* data units is allocated to the third logical channel; the allocating module 220 is specifically configured to: firstly allocate the fifth resource having a size equal to the size of the *l* data units to the third logical channel and then allocate the first resource having a size larger than the size of the *n* data units to the first logical channel, when the size of the first padding bits is smaller than the size of the second padding bits; firstly allocate the first resource having a size equal to the size of the *n* data units to the first logical channel and then allocate the fifth resource having a size larger than the size of the *l* data units to the third logical channel, when the size of the first padding bits is larger than the size of the second padding bits.

It should be understood that the terminal device 200 according to embodiments of the present application may correspondingly perform the method 100 in embodiments of the present application, and the above described and other operations and/or functions of the respective modules in the terminal device 200 are respectively for implementing the corresponding processes of the terminal devices in the respective methods in FIG. 1 to FIG. 6, which are not described herein for brevity.

Therefore, the terminal device in embodiments of the present application may, according to priorities of logical channels, allocate resources to a logical channel that does not have a function of segmenting a data unit, and the allocated resources are satisfied to be larger than or equal to sizes of an integer number of data units and smaller than a size of PBR^{∗}TTI of the logical channel, and also allocate resources to a logical channel having a function of segmenting a data unit, thus realizing a rapid allocation of resources to a logical channel that a function of segmenting is disabled, and improving the efficiency of resource allocation while ensuring more efficient use of granted resources.

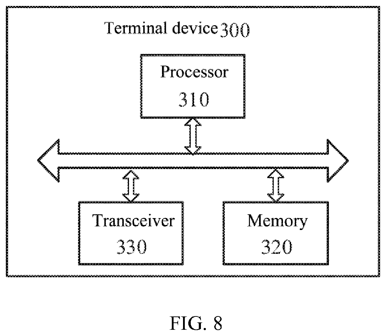

FIG. 8 shows a schematic block diagram of a terminal device 300 according to an embodiment of the present application. As shown in FIG. 8, the terminal device 300 includes a processor 310 and a transceiver 320. The processor 310 is connected to the transceiver 320. Optionally, the terminal device 300 further includes a memory 330 which is connected to the processor 310. Wherein, the processor 310, the memory 330, and the transceiver 320 communicate with each other through an internal connection path, transmit control and/or data signals. The memory 330 can be used to store instructions, and the processor 310 is used to execute instructions stored in the memory 330 for controlling the transceiver 320 to transmit information or a signal, and the processor 310 is configured to: determine a priority of at least one logical channel and total resources allocated to the at least one logical channel, the at least one logical channel includes a first logical channel that does not have a function of segmenting a data unit; allocate a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units, and the size of the first resource is smaller than or equal to a product of a priority bit rate (PBR) and a transmission time interval (TTI) of the first logical channel, and *n* is a positive integer; the transceiver 320 is configured to transmit the *n* data units by the first resource.

Therefore, the terminal device in embodiments of the present application allocates resources to a logical channel that does not have a function of segmenting a data unit, and the allocated resources are satisfied to be larger than or equal to sizes of an integer number of data units and smaller than a size of PBR^{∗}TTI of the logical channel, thus realizing a rapid allocation of resources to a logical channel that a function of segmenting is disabled, and also making more efficient use of granted resources.

Optionally, as an embodiment, a size of *n*+1 data units carried on the first logical channel is larger than the size of the first resource.

Optionally, as an embodiment, the at least one logical channel includes a second logical channel, the second logical channel has a function of segmenting a data unit, and the processor 310 is configured to: allocate a second resource for transmitting *m* data units carried on the second logical channel in the total resources to the second logical channel according to a priority of the second logical channel and data units carried on the second logical channel, a size of the *m* data units is equal to a size of the second resource, and m is a positive number.

Optionally, as an embodiment, the size of the *n* data units is smaller than a size of the first resource, and the transceiver 320 is configured to: transmit, by the first resource, the *n* data units carried on the first logical channel and first padding bits, a size of the first padding bits is equal to a difference between the size of the *n* data units and the size of the first resource.

Optionally, as an embodiment, the priority of the first logical channel is larger than or equal to the priority of the second logical channel, and the processor 310 is configured to: allocate, at a first moment, the first resource having a size equal to a size of the *n* data units to the first logical channel, according to the data carried on the first logical channel, and the size of *n*+1 data units carried on the first logical channel is larger than the product of a PBR and a TTI of the first logical channel; and allocate, at a second moment, a second resource to the second logical channel, according to the size of the first resource and the data units carried on the second logical channel, the second resource is all or part of remaining resources except the first resource in the total resources, and the second moment is after the first moment.

Optionally, as an embodiment, if the priority of the first logical channel is smaller than the priority of the second logical channel, the second resource is allocated to the second logical channel at a third moment, the size of the second resource is equal to a product of a PBR and a TTI of the second logical channel, and the first resource is allocated to the first logical channel at a fourth moment, the third moment is before the fourth moment.

Optionally, as an embodiment, the processor 310 is configured to: allocate, at the fourth moment, the first resource having a size equal to a size of the *n* data units to the first logical channel according to data units carried on the first logical channel, and the size of *n*+1 data units carried on the first logical channel is larger than the product of a PBR and a TTI of the first logical channel, the first resource is all or part of remaining resources except the second resource in the total resources; and allocate, at a fifth moment, a third resource to the second logical channel, the fifth moment is after the fourth moment, the third resource is all or part of remaining resources except the first resource and the second resource in the total resources.

Optionally, as an embodiment, the processor 310 is configured to: allocate, at a sixth moment, a fourth resource to the first logical channel, the sixth moment is after the fifth moment, the fourth resource is the remaining resources except the first resource, the second resource, and the third resource in the total resources.

Optionally, as an embodiment, the at least one logical channel includes a third logical channel that does not have a function of segmenting a data unit, a priority of the first logical channel is equal to a priority of the third logical channel, and the processor 310 is configured to: determine a difference between the size of the *n* data units and the size of the first resource to be a size of first padding bits, if a fifth resource having a size equal to a size of *l* data units carried on the third logical channel is firstly allocated to the third logical channel and then the first resource having a size larger than a size of the *n* data units is allocated to the first logical channel, the size of the fifth resource is smaller than or equal to a product of a PBR and a TTI of the third logical channel; and determine a difference between the size of the *l* data units and the size of the fifth resource to be a size of second padding bits, if the first resource having a size equal to the size of the *n* data units is firstly allocated to the first logical channel and then the fifth resource having a size larger than a size of the *l* data units is allocated to the third logical channel; the processor 310 is configured to: firstly allocate the fifth resource having a size equal to the size of the *l* data units to the third logical channel and then allocate the first resource having a size larger than the size of the *n* data units to the first logical channel, when the size of the first padding bits is smaller than the size of the second padding bits; firstly allocate the first resource having a size equal to a size of the *n* data units to the first logical channel and then allocate the fifth resource having a size larger than the size of the *l* data units to the third logical channel, when the size of the first padding bits is larger than the size of the second padding bits.

It should be understood that the terminal device 300 according to embodiments of the present application may correspond to the terminal device 200 in embodiments of the present application, and may correspond to the corresponding subject performing the method 100 according to embodiments of the present application, and the above described and other operations and/or functions of the respective units in the terminal device 300 are respectively for implementing the corresponding processes of the terminal device in the respective methods in FIG. 1 to FIG. 6, which are not described herein for brevity.

Therefore, the terminal device in embodiments of the present application may, according to priorities of logical channels, allocate resources to a logical channel that does not have a function of segmenting a data unit, and the allocated resources are satisfied to be larger than or equal to sizes of an integer number of data units and smaller than a size of PBR^{∗}TTI of the logical channel, and also allocate resources to a logical channel having a function of segmenting a data unit, thus realizing a rapid allocation of resources to a logical channel that a function of segmenting is disabled, and improving the efficiency of resource allocation while ensuring more efficient use of granted resources.

It should be noted that embodiments of the above method of the present application may be applied to a processor or implemented by a processor. The processor may be an integrated circuit chip with signal processing capabilities. In the implementation process, each step of the above embodiments of the method may be completed by an integrated logic circuit of hardware in a processor or by an instruction in a form of software. The above processor may be a general-purpose processor, a digital signal processor (DSP), an application specific integrated circuit (ASIC), a Field Programmable Gate Array (FPGA) or other programmable logic devices, discrete gates or transistor logic devices, and discrete hardware components, and can implement or execute the methods, steps, and logic blocks disclosed in embodiments of the present application. A general-purpose processor may be a microprocessor or the processor may be any conventional processor or the like. The steps in combination with the method disclosed in the embodiments of the present application may be directly implemented as being completed through performed by a hardware decoding processor, or being completed through performed by a combination of hardware and software modules in a decoding processor. The software modules can be located in a conventional storage medium in the prior art such as random access memory, flash memory, read only memory, programmable read only memory or electrically erasable programmable memory, registers, and the like. The storage medium is located in the memory, and the processor reads the information in the memory and combines its hardware to complete the steps of the above method.

It is understood that the memory in the embodiments of the present application may be a volatile memory or a non-volatile memory, or may include both volatile memory and non-volatile memory. The non-volatile memory may be a read-only memory (ROM), a programmable read only memory (PROM), an erasable programmable read only memory (Erasable PROM, EPROM), or an electrically erasable programmable read only memory (EEPROM) or flash memory. The volatile memory can be a Random Access Memory (RAM) that acts as an external cache. By way of examples, but not as limitations, many forms of RAM are available, such as static random access memory (SRAM), dynamic random access memory (DRAM), Synchronous DRAM (SDRAM), Double Data Rate SDRAM (DDR SDRAM), Enhanced Synchronous Dynamic Random Access Memory (ESDRAM), Synchronous-Link Dynamic Random Access Memory (SLDRAM) and Direct Rambus RAM (DR RAM). It should be noted that the memories of the systems and methods described herein are intended to including, without being limited to, these and any other suitable types of memories.

Persons of ordinary skill in the art will appreciate that elements and algorithm steps of various examples described with reference to the embodiments disclosed herein can be implemented in electronic hardware or a combination of computer software and electronic hardware. Whether these functions are performed in hardware or software depends on the specific application and design constraints of the solution. A person skilled in the art can use different methods for implementing the described functions for each particular application, but such implementation should not be considered to go beyond the scope of the present application as long as it is comprised in the definition of the appended claims.

A person skilled in the art can clearly understand that for the convenience and brevity of the description, the specific working process of the system, the device and the unit described above can refer to the corresponding process in the above embodiments of the method, and details are not described herein.

In the several embodiments provided by the present application, it should be understood that the disclosed systems, devices, and methods may be implemented in other manners. For example, embodiments of the apparatus described above are merely illustrative. For example, the division of the unit is only a division in logical functions. In actual implementation, there may be another division manner, and for example, multiple units or components may be combined or can be integrated into another system, or some features can be ignored or not executed. In addition, the coupling or direct coupling or communication connection therebetween shown or discussed herein may be an indirect coupling or communication connection through some interface, device or unit, and may be electrical, mechanical or otherwise.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the embodiment.

In addition, each of functional units in each of embodiments of the present application may be integrated into one processing unit, or each unit may exist physically separately, or two or more units may be integrated into one unit.

The functions may be stored in a computer readable storage medium if implemented in the form of a software functional unit and sold or used as a standalone product. Based on such understanding, the technical solution of the present application substantially or the part making contributions relative to the prior art or part of the technical solution, may be embodied in the form of a software product, wherein the computer software product is stored in a storage medium and includes some instructions to cause a computer device (which may be a personal computer, server, or network device, etc.) to perform all or part of the steps of the methods described in various embodiments of the present application. The foregoing storage medium includes various mediums which can store program codes: a U disk, a mobile hard disk, a read-only memory (ROM), a random access memory (RAM), a magnetic disk, or an optical disk, and the like.

The above description are only specific implementations of the present application, but the protection scope of the present application is not limited thereto, and any person skilled in the art can easily think of changes or substitutions within the technical scope disclosed in the present application, which is defined by the protection scope of the claims.

## Claims

1. A method for allocating logical channel resources, comprising:
determining (S 110), by a terminal device, a priority of at least one logical channel and total resources allocated to the at least one logical channel, the at least one logical channel comprises a first logical channel that does not have a function of segmenting a data unit;
allocating (S120), by the terminal device, a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units and the size of the first resource is smaller than or equal to a product of a priority bit rate, PBR, and a transmission time interval, TTI, of the first logical channel, and *n* is a positive integer; and
transmitting (S130), by the terminal device, the *n* data units by the first resource,
**characterized in that**:
the at least one logical channel comprises a third logical channel that does not have the function of segmenting the data unit, the priority of the first logical channel is equal to a priority of the third logical channel; and
when a size of first padding bits is smaller than a size of second padding bits,
before the allocating a first resource in the total resources to the first logical channel according to a priority of the first logical channel and data units carried on the first logical channel, the method further comprises:
allocating the fifth resource having a size equal to the size of the *l* data units to the third logical channel; and
the allocating a first resource in the total resources to the first logical channel according to a priority of the first logical channel and data units carried on the first logical channel comprises:
allocating the first resource having a size larger than the size of the *n* data units to the first logical channel;
when a size of first padding bits is larger than a size of second padding bits,
the allocating a first resource in the total resources to the first logical channel according to a priority of the first logical channel and data units carried on the first logical channel comprises:
allocating the first resource having a size equal to the size of the *n* data units to the first logical channel, and
after the allocating a first resource in the total resources to the first logical channel according to a priority of the first logical channel and data units carried on the first logical channel, the method further comprises:
allocating the fifth resource having a size larger than the size of the 1 data units to the third logical channel.

2. The method according to claim 1, wherein a size of *n*+1 data units carried on the first logical channel is larger than the size of the first resource, and wherein the at least one logical channel comprises a second logical channel that has the function of segmenting the data unit, the method further comprising:
allocating a second resource for transmitting m data units carried on the second logical channel in the total resources to the second logical channel according to a priority of the second logical channel and data units carried on the second logical channel, a size of the m data units is equal to a size of the second resource, and *m* is a positive number.

3. The method according to claim 1 or 2, wherein the size of the *n* data units is smaller than the size of the first resource, and
the transmitting the *n* data units by the first resource comprises:
transmitting, by the first resource, the *n* data units carried on the first logical channel and the first padding bits.

4. The method according to claim 2, wherein the priority of the first logical channel is larger than or equal to the priority of the second logical channel,
the allocating a first resource in the total resources to the first logical channel according to a priority of the first logical channel and data units carried on the first logical channel comprises:
allocating, at a first moment, the first resource having a size equal to the size of the *n* data units to the first logical channel according to the data units carried on the first logical channel, and the size of the *n*+1 data units carried on the first logical channel is larger than the product of the PBR and the TTI of the first logical channel;
the allocating a second resource in the total resources to the second logical channel according to a priority of the second logical channel and data units carried on the second logical channel comprises:
allocating, at a second moment, a second resource to the second logical channel according to the size of the first resource and the data units carried on the second logical channel, the second resource is all or part of remaining resources except the first resource in the total resources, and the second moment is after the first moment.

5. The method according to claim 2 or 3, wherein if the priority of the first logical channel is smaller than the priority of the second logical channel, allocating, at a third moment, the second resource to the second logical channel, the size of the second resource is equal to a product of a PBR and a TTI of the second logical channel, and allocating, at a fourth moment, the first resource to the first logical channel, the third moment is before the fourth moment.

6. The method according to claim 5, wherein the allocating a first resource in the total resources to the first logical channel according to a priority of the first logical channel and data units carried on the first logical channel comprises:
allocating, at the fourth moment, the first resource having a size equal to the size of the *n* data units to the first logical channel according to the data units carried on the first logical channel, and the size of *n*+1 data units carried on the first logical channel is larger than the product of the PBR and the TTI of the first logical channel, and the first resource is all or part of remaining resources except the second resource in the total resources;
the method further comprises:
allocating, at a fifth moment, a third resource to the second logical channel, the fifth moment is after the fourth moment, and the third resource is all or part of remaining resources except the first resource and the second resource in the total resources; and
the method further comprises:
allocating, at a sixth moment, a fourth resource to the first logical channel, the sixth moment is after the fifth moment, and the fourth resource is remaining resources except the first resource, the second resource, and the third resource in the total resources.

7. The method according to claim 1, wherein:
the method further comprises:
determining a difference between the size of the n data units and the size of the first resource to be the size of the first padding bits, if a fifth resource having a size equal to a size of *l* data units carried on the third logical channel is firstly allocated to the third logical channel and then the first resource having a size larger than the size of the *n* data units is allocated to the first logical channel, and the size of the fifth resource is smaller than or equal to a product of a PBR and a TTI of the third logical channel; and
determining a difference between the size of the *l* data units and the size of the fifth resource to be the size of the second padding bits, if the first resource having a size equal to the size of the *n* data units is firstly allocated to the first logical channel and then the fifth resource having a size larger than the size of the *l* data units is allocated to the third logical channel.

8. A terminal device, comprising:
a determining module (210), configured to determine a priority of at least one logical channel and total resources allocated to the at least one logical channel, the at least one logical channel comprises a first logical channel that does not have a function of segmenting a data unit;
an allocating module (220), configured to allocate a first resource in the total resources to the first logical channel according to a priority of the first logical channel and data units carried on the first logical channel, the first resource is used to transmit *n* data units carried on the first logical channel, a size of the first resource is larger than or equal to a size of the *n* data units and the size of the first resource is smaller than or equal to a product of a priority bit rate, PBR, and a transmission time interval, TTI, of the first logical channel, and *n* is a positive integer; and
a transmitting module (230), configured to transmit the *n* data units by the first resource,
**characterized in that**:
the at least one logical channel comprises a third logical channel that does not have the function of segmenting the data unit, the priority of the first logical channel is equal to a priority of the third logical channel; and
the allocating module (220) is specifically configured to:
firstly allocate the fifth resource having a size equal to the size of the *l* data units to the third logical channel and then allocate the first resource having a size larger than the size of the *n* data units to the first logical channel, when a size of first padding bits is smaller than a size of second padding bits; and
firstly allocate the first resource having a size equal to the size of the *n* data units to the first logical channel and then allocate the fifth resource having a size larger than the size of the *l* data units to the third logical channel, when a size of first padding bits is larger than a size of second padding bits.

9. The terminal device according to claim 8, wherein a size of *n*+1 data units carried on the first logical channel is larger than the size of the first resource, and wherein the at least one logical channel comprises a second logical channel that has the function of segmenting the data unit, and the allocating module (220) is further configured to:
allocate a second resource for transmitting *m* data units carried on the second logical channel in the total resources to the second logical channel according to a priority of the second logical channel and data units carried on the second logical channel, a size of the *m* data units is equal to a size of the second resource, and *m* is a positive number.

10. The terminal device according to any one of claims 8 to 9, wherein the transmitting module (230) is specifically configured to:
when the size of the *n* data units is smaller than the size of the first resource,
transmit, by the first resource, the *n* data units carried on the first logical channel and the first padding bits.

11. The terminal device according to claim 9, wherein the priority of the first logical channel is larger than or equal to the priority of the second logical channel, and
the allocating module (220) is specifically configured to:
allocate, at a first moment, the first resource having a size equal to the size of the *n* data units to the first logical channel according to the data units carried on the first logical channel, and the size of the *n*+1 data units carried on the first logical channel is larger than the product of the PBR and the TTI of the first logical channel; and
allocate, at a second moment, a second resource to the second logical channel according to the size of the first resource and the data units carried on the second logical channel, the second resource is all or part of remaining resources except the first resource in the total resources, and the second moment is after the first moment.

12. The terminal device according to claim 9 or 10, wherein if the priority of the first logical channel is smaller than the priority of the second logical channel, allocating, at a third moment, the second resource to the second logical channel, the size of the second resource is equal to a product of a PBR and a TTI of the second logical channel, and allocating, at a fourth moment, the first resource to the first logical channel, the third moment is before the fourth moment.

13. The terminal device according to claim 12, wherein the allocating module (220) is specifically configured to:
allocate, at the fourth moment, the first resource having a size equal to the size of the *n* data units to the first logical channel according to the data units carried on the first logical channel, and the size of *n*+1 data units carried on the first logical channel is larger than the product of the PBR and the TTI of the first logical channel, and the first resource is all or part of remaining resources except the second resource in the total resources;
allocate, at a fifth moment, a third resource to the second logical channel, the fifth moment is after the fourth moment, and the third resource is all or part of remaining resources except the first resource and the second resource in the total resources; and
wherein the allocating module (220) is specifically configured to:
allocate, at a sixth moment, a fourth resource to the first logical channel, the sixth moment is after the fifth moment, and the fourth resource is remaining resources except the first resource, the second resource, and the third resource in the total resources.

14. The terminal device according to claim 8, wherein the determining module (210) is specifically configured to:
determine a difference between the size of the n data units and the size of the first resource to be the size of the first padding bits, if a fifth resource having a size equal to a size of *l* data units carried on the third logical channel is firstly allocated to the third logical channel and then the first resource having a size larger than the size of the *n* data units is allocated to the first logical channel, and the size of the fifth resource is smaller than or equal to a product of a PBR and a TTI of the third logical channel; and
determine a difference between the size of the *l* data units and the size of the fifth resource to be the size of the second padding bits, if the first resource having a size equal to the size of the *n* data units is firstly allocated to the first logical channel and then the fifth resource having a size larger than the size of the *l* data units is allocated to the third logical channel.

## Patentansprüche

1. Verfahren zum Zuweisen logischer Kanalressourcen, Folgendes umfassend:
Bestimmen (S110), durch ein Endgerät, einer Priorität von mindestens einem logischen Kanal und den gesamten Ressourcen, die dem mindestens einen logischen Kanal zugewiesen sind, wobei der mindestens eine logische Kanal einen ersten logischen Kanal umfasst, der keine Funktion des Segmentierens einer Dateneinheit hat;
Zuweisen (S120), durch das Endgerät, einer ersten Ressource in den gesamten Ressourcen zu dem ersten logischen Kanal gemäß einer Priorität des ersten logischen Kanals und der auf dem ersten logischen Kanal transportierten Dateneinheiten, wobei die erste Ressource verwendet wird, um *n* Dateneinheiten, die auf dem ersten logischen Kanal transportiert werden, zu übertragen, wobei eine Größe der ersten Ressource größer als oder gleich einer Größe der *n* Dateneinheiten ist und die Größe der ersten Ressource kleiner als oder gleich einem Produkt einer Prioritätsbitrate (PBR) und eines Übertragungszeitintervalls (TTI) des ersten logischen Kanals ist, und *n* eine positive Ganzzahl ist; und
Übertragen (S130), durch das Endgerät, der *n* Dateneinheiten durch die erste Ressource,
**dadurch gekennzeichnet, dass**:
der mindestens eine logische Kanal einen dritten logischen Kanal umfasst, der nicht die Funktion des Segmentierens der Dateneinheit hat, wobei die Priorität des ersten logischen Kanals gleich einer Priorität des dritten logischen Kanals ist; und
wenn eine Größe von ersten Padding-Bits kleiner als eine Größe von zweiten Padding-Bits ist,
das Verfahren vor dem Zuweisen einer ersten Ressource in den gesamten Ressourcen zu dem ersten logischen Kanal gemäß einer Priorität des ersten logischen Kanals und der auf dem ersten logischen Kanal transportierten Dateneinheiten ferner Folgendes umfasst:
Zuweisen der fünften Ressource, deren Größe gleich der Größe der *l* Dateneinheiten ist, zu dem dritten logischen Kanal; und
wobei das Zuweisen einer ersten Ressource in den gesamten Ressourcen zu dem ersten logischen Kanal gemäß einer Priorität des ersten logischen Kanals und der auf dem ersten logischen Kanal transportierten Dateneinheiten Folgendes umfasst:
Zuweisen der ersten Ressource, deren Größe größer als die Größe der *n* Dateneinheiten ist, zu dem ersten logischen Kanal;
wenn eine Größe von ersten Padding-Bits größer als eine Größe von zweiten Padding-Bits ist,
das Zuweisen einer ersten Ressource in den gesamten Ressourcen zu dem ersten logischen Kanal gemäß einer Priorität des ersten logischen Kanals und der auf dem ersten logischen Kanal transportierten Dateneinheiten Folgendes umfasst:
Zuweisen der ersten Ressource, deren Größe gleich der Größe der Dateneinheiten ist, zu dem ersten logischen Kanal; und
wobei das Verfahren nach dem Zuweisen einer ersten Ressource in den gesamten Ressourcen zu dem ersten logischen Kanal gemäß einer Priorität des ersten logischen Kanals und der auf dem ersten logischen Kanal transportierten Dateneinheiten ferner Folgendes umfasst:
Zuweisen der fünften Ressource, deren Größe größer als die Größe der *l* Dateneinheiten ist, zu dem dritten logischen Kanal.

2. Verfahren gemäß Anspruch 1,
wobei eine Größe von auf dem ersten logischen Kanal transportierten *n*+1 Dateneinheiten größer als die Größe der ersten Ressource ist, und
wobei der mindestens eine logische Kanal einen zweiten logischen Kanal umfasst, der die Funktion des Segmentierens der Dateneinheit hat, und das Verfahren ferner Folgendes umfasst:
Zuweisen einer zweiten Ressource in den gesamten Ressourcen zum Übertragen von *m* Dateneinheiten, die auf dem zweiten logischen Kanal transportiert werden, zu dem zweiten logischen Kanal gemäß einer Priorität des zweiten logischen Kanals und der auf dem zweiten logischen Kanal transportierten Dateneinheiten, wobei eine Größe der *m* Dateneinheiten gleich einer Größe der zweiten Ressource ist, und *m* eine positive Zahl ist.

3. Verfahren gemäß Anspruch 1 oder 2,
wobei die Größe der *n* Dateneinheiten kleiner als die Größe der ersten Ressource ist, und
das Übertragen der *n* Dateneinheiten durch die erste Ressource Folgendes umfasst:
Übertragen, durch die erste Ressource, der auf dem ersten logischen Kanal transportierten *n* Dateneinheiten und der ersten Padding-Bits.

4. Verfahren gemäß Anspruch 2,
wobei die Priorität des ersten logischen Kanals größer als oder gleich der Priorität des zweiten logischen Kanals ist,
wobei das Zuweisen einer ersten Ressource in den gesamten Ressourcen zu dem ersten logischen Kanal gemäß einer Priorität des ersten logischen Kanals und der auf dem ersten logischen Kanal transportierten Dateneinheiten Folgendes umfasst:
Zuweisen, in einem ersten Moment, der ersten Ressource, deren Größe gleich der Größe der *n* Dateneinheiten ist, zu dem ersten logischen Kanal gemäß den auf dem ersten logischen Kanal transportierten Dateneinheiten, und wobei die Größe der auf dem ersten logischen Kanal transportierten *n+*1 Dateneinheiten größer als das Produkt der PBR und des TTI des ersten logischen Kanals ist;
wobei das Zuweisen einer zweiten Ressource in den gesamten Ressourcen zu dem zweiten logischen Kanal gemäß einer Priorität des zweiten logischen Kanals und der auf dem zweiten logischen Kanal transportierten Dateneinheiten Folgendes umfasst:
Zuweisen, in einem zweiten Moment, einer zweiten Ressource zu dem zweiten logischen Kanal gemäß der Größe der ersten Ressource und der auf dem zweiten logischen Kanal transportierten Dateneinheiten, wobei die zweite Ressource die Gesamtheit oder einen Teil der verbleibenden Ressourcen darstellt, außer der ersten Ressource in den gesamten Ressourcen, und der zweite Moment nach dem ersten Moment liegt.

5. Verfahren gemäß Anspruch 2 oder 3,
wobei, falls die Priorität des ersten logischen Kanals kleiner als die Priorität des zweiten logischen Kanals ist, beim Zuweisen, in einem dritten Moment, der zweiten Ressource zu dem zweiten logischen Kanal, die Größe der zweiten Ressource gleich einem Produkt einer PBR und eines TTI des zweiten logischen Kanals ist, und beim Zuweisen, in einem vierten Moment, der ersten Ressource zu dem ersten logischen Kanal, der dritte Moment vor dem vierten Moment liegt.

6. Verfahren gemäß Anspruch 5,
wobei das Zuweisen einer ersten Ressource in den gesamten Ressourcen zu dem ersten logischen Kanal gemäß einer Priorität des ersten logischen Kanals und der auf dem ersten logischen Kanal transportierten Dateneinheiten Folgendes umfasst:
Zuweisen, in dem vierten Moment, der ersten Ressource, deren Größe gleich der Größe der *n* Dateneinheiten ist, zu dem ersten logischen Kanal gemäß den auf dem ersten logischen Kanal transportierten Dateneinheiten, und wobei die Größe der auf dem ersten logischen Kanal transportierten *n+*1 Dateneinheiten größer als das Produkt der PBR und des TTI des ersten logischen Kanals ist, und die erste Ressource die Gesamtheit oder einen Teil der verbleibenden Ressourcen darstellt, außer der zweiten Ressource in den gesamten Ressourcen;
wobei das Verfahren ferner Folgendes umfasst:
Zuweisen, in einem fünften Moment, einer dritten Ressource zu dem zweiten logischen Kanal, wobei der fünfte Moment nach dem vierten Moment liegt und die dritte Ressource die Gesamtheit oder einen Teil der verbleibenden Ressourcen darstellt, außer der ersten Ressource und der zweiten Ressource in den gesamten Ressourcen; und
wobei das Verfahren ferner Folgendes umfasst:
Zuweisen, in einem sechsten Moment, einer vierten Ressource zu dem ersten logischen Kanal, wobei der sechste Moment nach dem fünften Moment liegt und die vierte Ressource die verbleibenden Ressourcen darstellt, außer der ersten Ressource, der zweiten Ressource und der dritten Ressource in den gesamten Ressourcen.

7. Verfahren gemäß Anspruch 1, wobei
das Verfahren ferner Folgendes umfasst:
Bestimmen einer Differenz zwischen der Größe der *n* Dateneinheiten und der Größe der ersten Ressource als die Größe der ersten Padding-Bits, falls eine fünfte Ressource, deren Größe gleich einer Größe von auf dem dritten logischen Kanal transportierten *l* Dateneinheiten ist, zuerst dem dritten logischen Kanal zugewiesen wird, und dann die erste Ressource, deren Größe größer als die Größe der *n* Dateneinheiten ist, dem ersten logischen Kanal zugewiesen wird, und die Größe der fünften Ressource kleiner als oder gleich einem Produkt einer PBR und eines TTI des dritten logischen Kanals ist; und
Bestimmen einer Differenz zwischen der Größe der *l* Dateneinheiten und der Größe der fünften Ressource als die Größe der zweiten Padding-Bits, falls die erste Ressource, deren Größe gleich der Größe der *n* Dateneinheiten ist, zuerst dem ersten logischen Kanal zugewiesen wird, und dann die fünfte Ressource, deren Größe größer als die Größe der *l* Dateneinheiten ist, dem dritten logischen Kanal zugewiesen wird.

8. Endgerät, das Folgendes umfasst:
ein Bestimmungsmodul (210), das dazu ausgelegt ist, eine Priorität von mindestens einem logischen Kanal und den gesamten Ressourcen, die dem mindestens einen logischen Kanal zugewiesen sind, zu bestimmen, wobei der mindestens eine logische Kanal einen ersten logischen Kanal umfasst, der keine Funktion des Segmentierens einer Dateneinheit hat;
ein Zuweisungsmodul (220), das dazu ausgelegt ist, eine erste Ressource in den gesamten Ressourcen zu dem ersten logischen Kanal gemäß einer Priorität des ersten logischen Kanals und der auf dem ersten logischen Kanal transportierten Dateneinheiten zuzuweisen, wobei die erste Ressource verwendet wird, um *n* Dateneinheiten, die auf dem ersten logischen Kanal transportiert werden, zu übertragen, wobei eine Größe der ersten Ressource größer als oder gleich einer Größe der *n* Dateneinheiten ist und die Größe der ersten Ressource kleiner als oder gleich einem Produkt einer Prioritätsbitrate (PBR) und eines Übertragungszeitintervalls (TTI) des ersten logischen Kanals ist, und *n* eine positive Ganzzahl ist; und
ein Sendemodul (230), das dazu ausgelegt ist, die *n* Dateneinheiten durch die erste Ressource zu übertragen,
**dadurch gekennzeichnet, dass**:
der mindestens eine logische Kanal einen dritten logischen Kanal umfasst, der nicht die Funktion des Segmentierens der Dateneinheit hat, wobei die Priorität des ersten logischen Kanals gleich einer Priorität des dritten logischen Kanals ist; und
das Zuweisungsmodul (220) speziell für Folgendes ausgelegt ist:
zuerst die fünfte Ressource, deren Größe gleich der Größe der l Dateneinheiten ist, dem dritten logischen Kanal zuzuweisen, und dann die erste Ressource, deren Größe größer als die Größe der *n* Dateneinheiten ist, dem ersten logischen Kanal zuzuweisen, wenn eine Größe von ersten Padding-Bits kleiner als eine Größe von zweiten Padding-Bits ist; und
zuerst die erste Ressource, deren Größe gleich der Größe der *n* Dateneinheiten ist, dem ersten logischen Kanal zuzuweisen, und dann die fünfte Ressource, deren Größe größer als die Größe der *l* Dateneinheiten ist, dem dritten logischen Kanal zuzuweisen, wenn eine Größe von ersten Padding-Bits größer als eine Größe von zweiten Padding-Bits ist.

9. Endgerät gemäß Anspruch 8,
wobei eine Größe von auf dem ersten logischen Kanal transportierten *n*+1 Dateneinheiten größer als die Größe der ersten Ressource ist, und
wobei der mindestens eine logische Kanal einen zweiten logischen Kanal umfasst, der die Funktion des Segmentierens der Dateneinheit hat, und das Zuweisungsmodul (220) ferner für Folgendes ausgelegt ist:
Zuweisen einer zweiten Ressource in den gesamten Ressourcen zum Übertragen von *m* Dateneinheiten, die auf dem zweiten logischen Kanal transportiert werden, zu dem zweiten logischen Kanal gemäß einer Priorität des zweiten logischen Kanals und der auf dem zweiten logischen Kanal transportierten Dateneinheiten, wobei eine Größe der *m* Dateneinheiten gleich einer Größe der zweiten Ressource ist, und *m* eine positive Zahl ist.

10. Endgerät gemäß einem der Ansprüche 8 bis 9,
wobei das Sendemodul (230) speziell für Folgendes ausgelegt ist:
wenn die Größe der *n* Dateneinheiten kleiner als die Größe der ersten Ressource ist,
Übertragen, durch die erste Ressource, der auf dem ersten logischen Kanal transportierten *n* Dateneinheiten und der ersten Padding-Bits.

11. Endgerät gemäß Anspruch 9,
wobei die Priorität des ersten logischen Kanals größer als oder gleich der Priorität des zweiten logischen Kanals ist, und
das Zuweisungsmodul (220) speziell für Folgendes ausgelegt ist:
Zuweisen, in einem ersten Moment, der ersten Ressource, deren Größe gleich der Größe der *n* Dateneinheiten ist, zu dem ersten logischen Kanal gemäß den auf dem ersten logischen Kanal transportierten Dateneinheiten, und wobei die Größe der auf dem ersten logischen Kanal transportierten *n*+1 Dateneinheiten größer als das Produkt der PBR und des TTI des ersten logischen Kanals ist; und
Zuweisen, in einem zweiten Moment, einer zweiten Ressource zu dem zweiten logischen Kanal gemäß der Größe der ersten Ressource und der auf dem zweiten logischen Kanal transportierten Dateneinheiten, wobei die zweite Ressource die Gesamtheit oder einen Teil der verbleibenden Ressourcen darstellt, außer der ersten Ressource in den gesamten Ressourcen, und der zweite Moment nach dem ersten Moment liegt.

12. Endgerät gemäß Anspruch 9 oder 10,
wobei, falls die Priorität des ersten logischen Kanals kleiner als die Priorität des zweiten logischen Kanals ist, beim Zuweisen, in einem dritten Moment, der zweiten Ressource zu dem zweiten logischen Kanal, die Größe der zweiten Ressource gleich einem Produkt einer PBR und eines TTI des zweiten logischen Kanals ist, und beim Zuweisen, in einem vierten Moment, der ersten Ressource zu dem ersten logischen Kanal, der dritte Moment vor dem vierten Moment liegt.

13. Endgerät gemäß Anspruch 12,
wobei das Zuweisungsmodul (220) speziell für Folgendes ausgelegt ist:
Zuweisen, in dem vierten Moment, der ersten Ressource, deren Größe gleich der Größe der *n* Dateneinheiten ist, zu dem ersten logischen Kanal gemäß den auf dem ersten logischen Kanal transportierten Dateneinheiten, und wobei die Größe der auf dem ersten logischen Kanal transportierten *n+*1 Dateneinheiten größer als das Produkt der PBR und des TTI des ersten logischen Kanals ist, und die erste Ressource die Gesamtheit oder einen Teil der verbleibenden Ressourcen darstellt, außer der zweiten Ressource in den gesamten Ressourcen;
Zuweisen, in einem fünften Moment, einer dritten Ressource zu dem zweiten logischen Kanal, wobei der fünfte Moment nach dem vierten Moment liegt und die dritte Ressource die Gesamtheit oder einen Teil der verbleibenden Ressourcen darstellt, außer der ersten Ressource und der zweiten Ressource in den gesamten Ressourcen; und
wobei das Zuweisungsmodul (220) speziell für Folgendes ausgelegt ist:
Zuweisen, in einem sechsten Moment, einer vierten Ressource zu dem ersten logischen Kanal, wobei der sechste Moment nach dem fünften Moment liegt und die vierte Ressource die verbleibenden Ressourcen darstellt, außer der ersten Ressource, der zweiten Ressource und der dritten Ressource in den gesamten Ressourcen.

14. Endgerät gemäß Anspruch 8,
wobei das Bestimmungsmodul (210) speziell für Folgendes ausgelegt ist:
Bestimmen einer Differenz zwischen der Größe der *n* Dateneinheiten und der Größe der ersten Ressource als die Größe der ersten Padding-Bits, falls eine fünfte Ressource, deren Größe gleich einer Größe von auf dem dritten logischen Kanal transportierten *l* Dateneinheiten ist, zuerst dem dritten logischen Kanal zugewiesen wird, und dann die erste Ressource, deren Größe größer als die Größe der *n* Dateneinheiten ist, dem ersten logischen Kanal zugewiesen wird, und die Größe der fünften Ressource kleiner als oder gleich einem Produkt einer PBR und eines TTI des dritten logischen Kanals ist; und
Bestimmen einer Differenz zwischen der Größe der *l* Dateneinheiten und der Größe der fünften Ressource als die Größe der zweiten Padding-Bits, falls die erste Ressource, deren Größe gleich der Größe der *n* Dateneinheiten ist, zuerst dem ersten logischen Kanal zugewiesen wird, und dann die fünfte Ressource, deren Größe größer als die Größe der *l* Dateneinheiten ist, dem dritten logischen Kanal zugewiesen wird.

## Revendications

1. Procédé d'attribution de ressources de canal logique, comprenant :
la détermination (S110), par un dispositif terminal, d'une priorité d'au moins un canal logique et de ressources totales attribuées à l'au moins un canal logique, l'au moins un canal logique comprenant un premier canal logique n'ayant pas pour fonction de segmenter une unité de données ;
l'attribution (S120), par le dispositif terminal, d'une première ressource dans les ressources totales au premier canal logique en fonction d'une priorité du premier canal logique et d'unités de données convoyées sur le premier canal logique, la première ressource servant à transmettre *n* unités de données convoyées sur le premier canal logique, une taille de la première ressource étant supérieure ou égale à une taille des *n* unités de données et la taille de la première ressource étant inférieure ou égale à un produit d'un débit binaire de priorité, PBR, et d'un intervalle de temps de transmission, TTI, du premier canal logique, et *n* étant un entier positif ; et
la transmission (S130), par le dispositif terminal, des *n* unités de données par la première ressource,
**caractérisé en ce que** :
l'au moins un canal logique comprend un troisième canal logique n'ayant pas pour fonction de segmenter l'unité de données, la priorité du premier canal logique étant égale à une priorité du troisième canal logique ; et
quand une taille de premiers bits de remplissage est inférieure à une taille de seconds bits de remplissage,
avant l'attribution d'une première ressource dans les ressources totales au premier canal logique en fonction d'une priorité du premier canal logique et d'unités de données convoyées sur le premier canal logique, le procédé comprenant en outre :
l'attribution de la cinquième ressource d'une taille égale à la taille des *l* unités de données au troisième canal logique ; et
l'attribution d'une première ressource dans les ressources totales au premier canal logique en fonction d'une priorité du premier canal logique et d'unités de données convoyées sur le premier canal logique comprend :
l'attribution de la première ressource d'une taille supérieure à la taille des *n* unités de données au premier canal logique ;
quand une taille de premiers bits de remplissage est supérieure à une taille de seconds bits de remplissage,
l'attribution d'une première ressource dans les ressources totales au premier canal logique en fonction d'une priorité du premier canal logique et d'unités de données convoyées sur le premier canal logique comprend :
l'attribution de la première ressource d'une taille égale à la taille des *n* unités de données au premier canal logique, et
après l'attribution d'une première ressource dans les ressources totales au premier canal logique en fonction d'une priorité du premier canal logique et d'unités de données convoyées sur le premier canal logique, le procédé comprenant en outre :
l'attribution de la cinquième ressource d'une taille supérieure à la taille des *l* unités de données au troisième canal logique.

2. Procédé selon la revendication 1, dans lequel une taille de *n*+l unités de données convoyées sur le premier canal logique est supérieure à la taille de la première ressource, et l'au moins un canal logique comprend un deuxième canal logique ayant pour fonction de segmenter l'unité de données, le procédé comprenant en outre :
l'attribution d'une deuxième ressource pour transmettre *m* unités de données convoyées sur le deuxième canal logique dans les ressources totales au deuxième canal logique en fonction d'une priorité du deuxième canal logique et d'unités de données convoyées sur le deuxième canal logique, une taille des *m* unités de données étant égale à une taille de la deuxième ressource, et *m* étant un nombre positif.

3. Procédé selon la revendication 1 ou 2, dans lequel la taille des *n* unités de données est inférieure à la taille de la première ressource, et
la transmission des *n* unités de données par la première ressource comprend :
la transmission, par la première ressource, des *n* unités de données convoyées sur le premier canal logique et des premiers bits de remplissage.

4. Procédé selon la revendication 2, dans lequel la priorité du premier canal logique est supérieure ou égale à la priorité du deuxième canal logique,
l'attribution d'une première ressource dans les ressources totales au premier canal logique en fonction d'une priorité du premier canal logique et d'unités de données convoyées sur le premier canal logique comprend :
l'attribution, à un premier instant, de la première ressource d'une taille égale à la taille des *n* unités de données au premier canal logique en fonction des unités de données convoyées sur le premier canal logique, et la taille des *n*+l unités de données convoyées sur le premier canal logique étant supérieure au produit du PBR et du TTI du premier canal logique ;
l'attribution d'une deuxième ressource dans les ressources totales au deuxième canal logique en fonction d'une priorité du deuxième canal logique et d'unités de données convoyées sur le deuxième canal logique comprend :
l'attribution, à un deuxième instant, d'une deuxième ressource au deuxième canal logique en fonction de la taille de la première ressource et des unités de données convoyées sur le deuxième canal logique, la deuxième ressource constituant la totalité ou une partie de ressources restantes à l'exception de la première ressource dans les ressources totales, et le deuxième instant étant postérieur au premier instant.

5. Procédé selon la revendication 2 ou 3, dans lequel si la priorité du premier canal logique est inférieure à la priorité du deuxième canal logique, l'attribution, à un troisième instant, de la deuxième ressource au deuxième canal logique, la taille de la deuxième ressource étant égale au produit d'un PBR et d'un TTI du deuxième canal logique, et l'attribution, à un quatrième instant, de la première ressource au premier canal logique, le troisième instant étant antérieur au quatrième instant.

6. Procédé selon la revendication 5, dans lequel l'attribution d'une première ressource dans les ressources totales au premier canal logique en fonction d'une priorité du premier canal logique et d'unités de données convoyées sur le premier canal logique comprend :
l'attribution, au quatrième instant, de la première ressource d'une taille égale à la taille des *n* unités de données au premier canal logique en fonction des unités de données convoyées sur le premier canal logique, et la taille de *n*+l unités de données convoyées sur le premier canal logique étant supérieure au produit du PBR et du TTI du premier canal logique, et la première ressource constituant la totalité ou une partie de ressources restantes à l'exception de la deuxième ressource dans les ressources totales ;
le procédé comprenant en outre :
l'attribution, à un cinquième instant, d'une troisième ressource au deuxième canal logique, le cinquième instant étant postérieur au quatrième instant, et la troisième ressource constituant la totalité ou une partie de ressources restantes à l'exception de la première ressource et de la deuxième ressource dans les ressources totales ; et
le procédé comprenant en outre :
l'attribution, à un sixième instant, d'une quatrième ressource au premier canal logique, le sixième instant étant postérieur au cinquième instant, et la quatrième ressource constituant des ressources restantes à l'exception de la première ressource, la deuxième ressource, et la troisième ressource dans les ressources totales.

7. Procédé selon la revendication 1, dans lequel :
le procédé comprend en outre :
la détermination qu'une différence entre la taille des *n* unités de données et la taille de la première ressource est la taille des premiers bits de remplissage, si une cinquième ressource d'une taille égale à une taille de *l* unités de données convoyées sur le troisième canal logique est attribuée tout d'abord au troisième canal logique puis la première ressource d'une taille supérieure à la taille des *n* unités de données est attribuée au premier canal logique, et la taille de la cinquième ressource étant inférieure ou égale à un produit d'un PBR et d'un TTI du troisième canal logique ; et
la détermination qu'une différence entre la taille des *l* unités de données et la taille de la cinquième ressource est la taille des seconds bits de remplissage, si la première ressource d'une taille égale à la taille des *n* unités de données est attribuée tout d'abord au premier canal logique puis la cinquième ressource d'une taille supérieure à la taille des *l* unités de données est attribuée au troisième canal logique.

8. Dispositif terminal, comprenant :
un module de détermination (210), configuré pour déterminer une priorité d'au moins un canal logique et des ressources totales attribuées à l'au moins un canal logique, l'au moins un canal logique comprenant un premier canal logique n'ayant pas pour fonction de segmenter une unité de données ;
un module d'attribution (220), configuré pour attribuer une première ressource dans les ressources totales au premier canal logique en fonction d'une priorité du premier canal logique et d'unités de données convoyées sur le premier canal logique, la première ressource servant à transmettre *n* unités de données convoyées sur le premier canal logique, une taille de la première ressource étant supérieure ou égale à une taille des *n* unités de données et la taille de la première ressource étant inférieure ou égale à un produit d'un débit binaire de priorité, PBR, et d'un intervalle de temps de transmission, TTI, du premier canal logique, et *n* étant un entier positif ; et
un module de transmission (230), configuré pour transmettre les *n* unités de données par la première ressource,
**caractérisé en ce que** :
l'au moins un canal logique comprend un troisième canal logique n'ayant pas pour fonction de segmenter l'unité de données, la priorité du premier canal logique étant égale à une priorité du troisième canal logique ; et
le module d'attribution (220) est configuré spécifiquement pour :
attribuer tout d'abord la cinquième ressource d'une taille égale à la taille des *l* unités de données au troisième canal logique puis attribuer la première ressource d'une taille supérieure à la taille des *n* unités de données au premier canal logique, quand une taille de premiers bits de remplissage est inférieure à une taille de seconds bits de remplissage ; et
attribuer tout d'abord la première ressource d'une taille égale à la taille des n unités de données au premier canal logique puis attribuer la cinquième ressource d'une taille supérieure à la taille des *l* unités de données au troisième canal logique, quand une taille de premiers bits de remplissage est supérieure à une taille de seconds bits de remplissage.

9. Dispositif terminal selon la revendication 8, dans lequel une taille de n+l unités de données convoyées sur le premier canal logique est supérieure à la taille de la première ressource, et dans lequel l'au moins un canal logique comprend un deuxième canal logique ayant pour fonction de segmenter l'unité de données, et le module d'attribution (220) est configuré en outre pour :
attribuer une deuxième ressource pour transmettre m unités de données convoyées sur le deuxième canal logique dans les ressources totales au deuxième canal logique en fonction d'une priorité du deuxième canal logique et d'unités de données convoyées sur le deuxième canal logique, une taille des *m* unités de données étant égale à une taille de la deuxième ressource, et m étant un nombre positif.

10. Dispositif terminal selon l'une quelconque des revendications 8 à 9, dans lequel le module de transmission (230) est configuré spécifiquement pour :
quand la taille des n unités de données est inférieure à la taille de la première ressource,
transmettre, par la première ressource, les n unités de données convoyées sur le premier canal logique et les premiers bits de remplissage.

11. Dispositif terminal selon la revendication 9, dans lequel la priorité du premier canal logique est supérieure ou égale à la priorité du deuxième canal logique, et
le module d'attribution (220) est configuré spécifiquement pour :
attribuer, à un premier instant, la première ressource d'une taille égale à la taille des n unités de données au premier canal logique en fonction des unités de données convoyées sur le premier canal logique, et la taille des n+l unités de données convoyées sur le premier canal logique étant supérieure au produit du PBR et du TTI du premier canal logique ; et
attribuer, à un deuxième instant, une deuxième ressource au deuxième canal logique en fonction de la taille de la première ressource et des unités de données convoyées sur le deuxième canal logique, la deuxième ressource constituant la totalité ou une partie de ressources restantes à l'exception de la première ressource dans les ressources totales, et le deuxième instant étant postérieur au premier moment.

12. Dispositif terminal selon la revendication 9 ou 10, dans lequel si la priorité du premier canal logique est inférieure à la priorité du deuxième canal logique, l'attribution, à un troisième instant, de la deuxième ressource au deuxième canal logique, la taille de la deuxième ressource étant égale à un produit d'un PBR et d'un TTI du deuxième canal logique, et l'attribution, à un quatrième instant, de la première ressource au premier canal logique, le troisième instant étant antérieur au quatrième instant.

13. Dispositif terminal selon la revendication 12, dans lequel le module d'attribution (220) est configuré spécifiquement pour :
attribuer, au quatrième instant, la première ressource d'une taille égale à la taille des n unités de données au premier canal logique en fonction des unités de données convoyées sur le premier canal logique, et la taille de n+l unités de données convoyées sur le premier canal logique étant supérieure au produit du PBR et du TTI du premier canal logique, et la première ressource constituant la totalité ou une partie de ressources restantes à l'exception de la deuxième ressource dans les ressources totales ;
attribuer, à un cinquième instant, une troisième ressource au deuxième canal logique, le cinquième instant étant postérieur au quatrième instant, et la troisième ressource constituant la totalité ou une partie de ressources restantes à l'exception de la première ressource et la deuxième ressource dans les ressources totales ; et
dans lequel le module d'attribution (220) est configuré spécifiquement pour :
attribuer, à un sixième instant, une quatrième ressource au premier canal logique, le sixième instant étant postérieur au cinquième instant, et la quatrième ressource constituant des ressources restantes à l'exception de la première ressource, la deuxième ressource, et la troisième ressource dans les ressources totales.

14. Dispositif terminal selon la revendication 8, dans lequel le module de détermination (210) est configuré spécifiquement pour :
déterminer qu'une différence entre la taille des n unités de données et la taille de la première ressource est la taille des premiers bits de remplissage, si une cinquième ressource d'une taille égale à une taille de *l* unités de données convoyées sur le troisième canal logique est attribuée tout d'abord au troisième canal logique puis la première ressource d'une taille supérieure à la taille des n unités de données est attribuée au premier canal logique, et la taille de la cinquième ressource étant inférieure ou égale à un produit d'un PBR et d'un TTI du troisième canal logique ; et
déterminer qu'une différence entre la taille des *l* unités de données et la taille de la cinquième ressource est la taille des seconds bits de remplissage, si la première ressource d'une taille égale à la taille des n unités de données est attribuée tout d'abord au premier canal logique puis la cinquième ressource d'une taille supérieure à la taille des *l* unités de données est attribuée au troisième canal logique.
